(19) Europäisches Patentamt
European Patent Office
Office européen des brevets

(11) **EP 1 247 016 B2**

(12) **NEUE EUROPÄISCHE PATENTSCHRIFT**
Nach dem Einspruchsverfahrens

(45) Veröffentlichungstag und Bekanntmachung des Hinweises auf die Entscheidung über den Einspruch:
**13.08.2008  Patentblatt 2008/33**

(45) Hinweis auf die Patenterteilung:
**06.04.2005  Patentblatt 2005/14**

(21) Anmeldenummer: **00965845.1**

(22) Anmeldetag: **13.09.2000**

(51) Int Cl.:
*F02D 41/18* *(2006.01)*       *F02D 21/08* *(2006.01)*
*F02D 23/02* *(2006.01)*

(86) Internationale Anmeldenummer:
**PCT/DE2000/003181**

(87) Internationale Veröffentlichungsnummer:
**WO 2001/048363 (05.07.2001 Gazette 2001/27)**

(54) **VERFAHREN UND VORRICHTUNG ZUR STEUERUNG EINER BRENNKRAFTMASCHINE MIT EINEM LUFTSYSTEM**

METHOD AND DEVICE FOR CONTROLLING AN INTERNAL COMBUSTION ENGINE THAT IS PROVIDED WITH AN AIR SYSTEM

PROCEDE ET DISPOSITIF POUR COMMANDER UN MOTEUR A COMBUSTION INTERNE POURVU D'UN SYSTEME D'ALIMENTATION EN AIR

(84) Benannte Vertragsstaaten:
**DE ES FR GB IT**

(30) Priorität: **28.12.1999  DE 19963358**

(43) Veröffentlichungstag der Anmeldung:
**09.10.2002  Patentblatt 2002/41**

(73) Patentinhaber: **ROBERT BOSCH GMBH**
**70442 Stuttgart (DE)**

(72) Erfinder:
• **ENGEL, Gerhard**
**70469 Stuttgart (DE)**
• **BIRK, Manfred**
**71739 Oberriexingen (DE)**
• **BLEILE, Thomas**
**70435 Stuttgart (DE)**
• **MEIER, Frank**
**70806 Kornwestheim (DE)**
• **KRAUS, Benedikt**
**70806 Kornwestheim (DE)**
• **RUPP, Peter**
**71686 Remseck (DE)**
• **KRAEMER, Wolfgang**
**70191 Stuttgart (DE)**

(56) Entgegenhaltungen:
**EP-A- 0 845 586          DE-A- 4 214 648**
**US-A- 5 205 260**

• **MTZ "Motortechnische Zeitschrift" S. 186-192, 60 Jahrgang/ Nr. 3**

EP 1 247 016 B2

## Beschreibung

Die Erfindung betrifft ein Verfahren und eine Vorrichtung zur Steuerung einer Brennkraftmaschine mit einem Luftsystem.

Ein Verfahren und eine Vorrichtung zur Steuerung einer Brennkraftmaschine mit einem Luftsystem ist beispielsweise aus der DE 197 56 619 bekannt. Dort wird ein System zum Betreiben einer Brennkraftmaschine insbesondere in einem Kraftfahrzeug beschrieben, bei dem die Luft über eine in einem Ansaugrohr angeordnete Drosselklappe einem Brennraum zugeführt wird, wobei der Mengenstrom über die Drosselklappe ermittelt wird. Dabei ist in einer Abgasrückführleitung ein Ventil angeordnet, wobei der Mengenstrom über das Ventil in der Abgasrückführleitung ebenfalls ermittelt wird. Ausgehend von den beiden Luftmengenströmen wird der Luftmengenstrom in den Brennraum bestimmt. Problematisch bei dieser Einrichtung ist es, dass verschiedene Größen, die zur Berechnung benötigt werden, nur schwer mittels Sensoren erfasst werden können. Nachteilig ist daher, dass eine große Anzahl von Sensoren zur Erfassung der verschiedenen Größen erforderlich ist.

Ein weiteres Verfahren und eine Vorrichtung zur Steuerung einer Brennkraftmaschine mit einem Luftsystem ist aus der EP-A-0845586 bekannt. Mittels eines Modells wird der Druck im Ansaugsystem ausgehend von verschiedenen Größen, wie dem Druck nach der Drosselklappe, dem Druck und der Temperatur der Umgebungsluft sowie von Stellgrößen, wie beispielsweise der Drosselklappe, des Abgasrückführveritils und/oder des Einlassventils berechnet. Ausgehend von diesen Größen und weiteren Größen wird das Luftsystem modelliert.

Ferner ist in der MTZ "Motortechnische Zeitschrift" auf den Seiten 186 - 192 (60. Jahrgang/Nr3. ISSN 0024-8525) ein Modell für die Regelstrecke eines Dieselmotors beschrieben. Insbesondere wird ein Modell für die Turbine, den Motor, den Verdichter und die Abgasrückführung beschrieben. Das Modell für die Abgasrückführung verarbeit Stellgrößen, Messgrößen und Ausgangsgrößen der anderen Modelle.

Vorteile der Erfindung

Mit den Merkmalskombinationen der unabhängigen Ansprüche ist es möglich, wenigstens eine Größe, die das Luftsystem charakterisiert, zu bestimmen. Dabei sind lediglich einige wenige Messgrößen erforderlich, die mittels einfacher, billiger Sensoren leicht erfassbar sind. Des weiteren werden Größen benötigt, die bei der Steuerung der Brennkraftmaschine intern im Steuergerät vorliegen.

Zeichnung

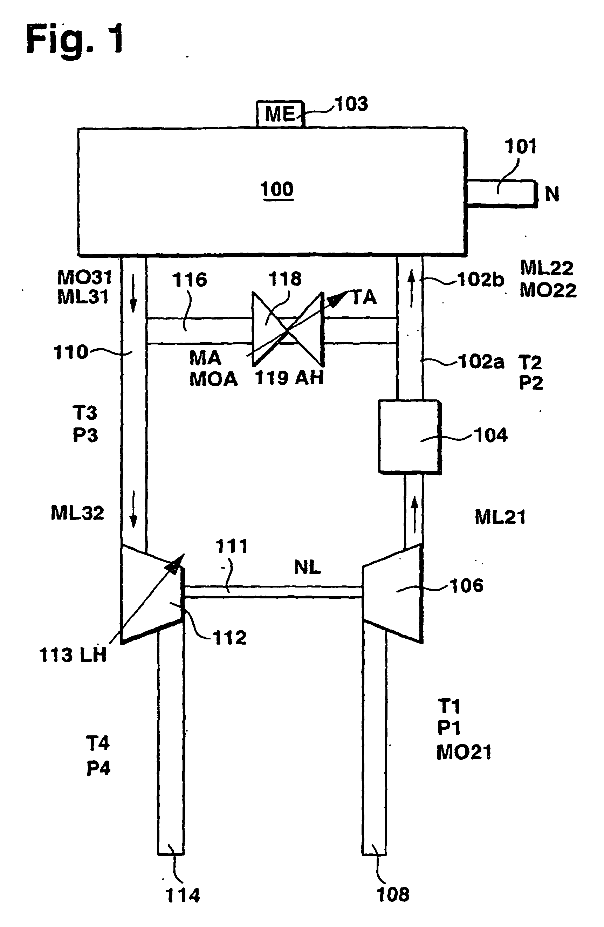

Die Erfindung wird nachstehend anhand der in der Zeichnung dargestellten Ausführungsformen erläutert. Es zeigen Figur 1 eine schematische Darstellung der Brennkraftmaschine samt Luftsystem, Figur 2 das Gesamtmodell des Luftsystems als Blockdiagramm und Figuren 3 bis 8 zeigen die verschiedenen Teilmodelle als Blockdiagramme.

Beschreibung der Ausführungsbeispiele

Im folgenden wird die erfindungsgemäße Vorgehensweise am Beispiel einer Dieselbrennkraftmaschine beschrieben. Die Erfindung ist aber nicht auf die Anwendung bei Dieselbrennkraftmaschinen beschränkt, sie kann auch bei anderen Brennkraftmaschinen, insbesondere bei direkteinspritzenden Benzinbrennkraftmaschinen verwendet werden.

Einer Brennkraftmaschine 100 wird über eine Hochdruckfrischluftleitung 102 eine bestimmte Gasmenge ML22, die einen bestimmten Sauerstoffanteil M022 enthält, zugeführt. Die Größe MO22 wird auch als Sauerstoffanteil vor der Verbrennung bezeichnet. Die Hochdruckfrischluftleitung 102 besteht aus zwei Teilen. Ein erster Teil ist mit 102 a bezeichnet, ein zweiter ist mit 102 b bezeichnet. Der erste Teil entspricht der Leitung bis zur Abgaszumischung. Der zweite Teil 102b entspricht der Leitung nach der Abgaszumischung. In dem ersten Teil 102a kann einen Ladeluftkühler 104 beinhalten. Die Luft in dem ersten Teil der Hochdruckfrischluftleitung 102a besitzt eine Temperatur T2 und einen Druck P2.

Über eine Niederdruckfrischluftleitung 108 gelangt die Umgebungsluft zu einem Verdichter 106 und strömt dann über den Ladeluftkühler 104 in die Hochdruckfrischluftleitung 102. Über den Verdichter strömt die Luftmenge ML21 mit dem Sauerstoffanteil M021 in die Hochdruckfrischluftleitung 102. Die Luftmenge ML21 mit dem Sauerstoffanteil MO21, die durch die Niederdruckfrischluftleitung 108 strömt, entspricht der Luftmenge mit dem entsprechenden Sauerstoffanteil, die durch den Verdichter 106 bzw. durch den Ladeluftkühler 104 strömt. Die Temperatur T1 und der Druck P1, der in der Niederdruckfrischluftleitung 108 herrscht, entspricht den Umgebungsbedingungen, d.h. dem Umgebungsdruck und der Umgebungstemperatur.

Von der Brennkraftmaschine 100 strömt die Luftmenge ML31 mit dem Sauerstoffanteil MO31 in eine Hochdruckabgasleitung 110. Die Größe MO31 wird auch als Sauerstoffanteil nach der Verbrennung bezeichnet. In der Hochdruckabgasleitung 110 herrscht die Temperatur T3 und der Druck P3. Diese Werte werden auch als Abgasdruck P3 und Abgastemperatur T3 bezeichnet.

Eine Luftmenge ML32 gelangt von der Hochdruckabgasleitung 110 zu einer Turbine 112, diese wird auch als Luftmenge über die Turbine bezeichnet. Von der Turbine 112 gelangt das Abgas in eine Niederdruckabgasleitung 114, die auch als Auspuffleitung 114 bezeichnet wird. In der Niederdruckabgasleitung herrscht Temperatur T4 und der Druck P4.

Die Turbine 112 treibt über eine Welle 111 den Verdichter 106 an. Die Drehzahl NL der Welle wird als Laderdrehzahl bezeichnet. Mittels eines Laderstellers 113 kann die Charakteristik der Turbine und damit des gesamten Laders beeinflußt werden. Zur Ansteuerung wird der Ladersteller 113 mit einem Ansteuersignal LTV beaufschlagt, das eine Verstellung des Laders um einen Hub LH zur Folge hat. Die Größe LH wird auch als Laderhub und die Größe LTV als Ladertastverhältnis bezeichnet.

Zwischen der Hochdruckabgasleitung 110 und der Hochdruckfrischluftleitung 102 besteht eine Verbindung, die als Abgasrückführleitung 116 bezeichnet ist. Durch diese Abgasrückführleitung 116 strömt die Luftmenge MA, die den Sauerstoffanteil MOA beinhaltet. Der Querschnitt der Abgasrückführleitung 116 ist vorzugsweise mittels eines Abgasrückführventils 118 steuerbar. Zur Ansteuerung wird der Abgasrückführsteller 119 einem Ansteuersignal ATV beaufschlagt, das eine Verstellung des Abgasrückführventils 118 um einen Hub AH zur Folge hat. Die Größe AH wird auch als Abgasrückführhub und die Größe LTV als Abgasrückführtastverhältnis bezeichnet.

Vorzugsweise wird die Drehzahl N an der Kurbel und/oder der Nockenwelle der Brennkraftmaschine mittels eines Drehzahlsensors 101 erfaßt. Desweiteren sind Mengenstellglieder 103 vorgesehen, die die einzuspritzende Kraftstoffmenge ME, die der Brennkraftmaschine zugeführt wird, bestimmen. Hierzu werden die Stellglieder 103 mit einem Mengensignal ME beaufschlagt.

Zur genauen Steuerung der Brennkraftmaschine bzw. der Stellglieder 118 und 113 sollten verschiedene der dargestellten Größen bekannt sein. Insbesondere sollte die Sauerstoffmenge bzw. der Sauerstoffanteil M022, die der Brennkraftmaschine zugeführt wird, bekannt sein. Die Sauerstoffmenge bestimmt zusammen mit der eingespritzten Kraftstoffmenge ME die Abgasemissionen, insbesondere die Rußemissionen bei Dieselbrennkraftmaschinen. Desweiteren ist es vorteilhaft, wenn die verschiedenen Druck- und Temperaturwerte bekannt sind. Ferner ist es vorteilhaft, wenn die Laderdrehzahl NL bekannt ist. Diese Größen können zur Überwachung des Gesamtsystems und/oder zur Steuerung/ Regelung verwendet werden.

Besonders vorteilhaft ist es, wenn diese Größen nicht direkt erfaßt werden, sonder mittels eines Modells und/oder eines oder mehrerer Teilmodelle bestimmt werden. In diesem Fall werden keine entsprechenden Sensoren benötigt.

Erfindungsgemäß ist nun vorgesehen, daß mittels wenigstens eines Modells eine der Größen oder mehrere der Größen, die das Luftsystem charakterisieren ausgehend von einer oder mehreren Stellgrößen, insbesondere für die eingespritzte Kraftstoffmenge ME, die Stellgröße für das Abgasrückführventil ATV und die Stellgröße LTV für die Turbine 112, und wenigstens einer Meßgröße bezüglich der Umgebungstemperatur T1 und/ oder des Umgebungsdrucks P1 bestimmt werden. Besonders vorteilhaft ist es, wenn die eine oder mehreren Größen, die das Luftsystem charakterisieren, ausgehend von der einzuspritzenden Kraftstoffmenge ME der Drehzahl N, einer die Umgebungstemperatur T1 und den Umgebungsdruck P1 charakterisierenden Größe bestimmt werden, wobei zusätzlich die Stellgröße des Abgasrückführventils 118 und die Stellgröße des Laders 112 verwendet werden. Besonders vorteilhaft hieran ist, daß die einzuspritzende Kraftstoffmenge nicht erfaßt werden muß, da diese Größe bereits vorbekannt ist und zur Steuerung der Brennkraftmaschine verwendet wird. Insbesondere wird hierzu eine interne im Steuergerät vorliegende Größe verwendet. Ebenso ist die Drehzahl N der Brennkraftmaschine bekannt, da diese ebenfalls zur Steuerung der Brennkraftmaschine unabdingbar ist. Entsprechendes gilt für die Temperatur und der Druck T1 und P1. Bei den Ansteuersignalen für die Stellglieder 118 und 112 gilt entsprechendes.

Besonders vorteilhaft ist es, daß verschiedene Teilmodelle für Teilsysteme gebildet werden, wobei jedes Teilmodell verschiedene Eingangsgrößen und ausgehend von diesen verschiedene Ausgangsgrößen berechnet. Dabei ist vorgesehen, daß verschiedene Eingangsgrößen verschiedener Modelle durch Ausgangsgrößen anderer Modelle gebildet werden. Als Eingangsgrößen des Gesamtmodells in Summe der verschiedenen Teilmodelle sind lediglich leicht erfaßbare Meßgrößen bzw. bekannte Stellgrößen erforderlich.

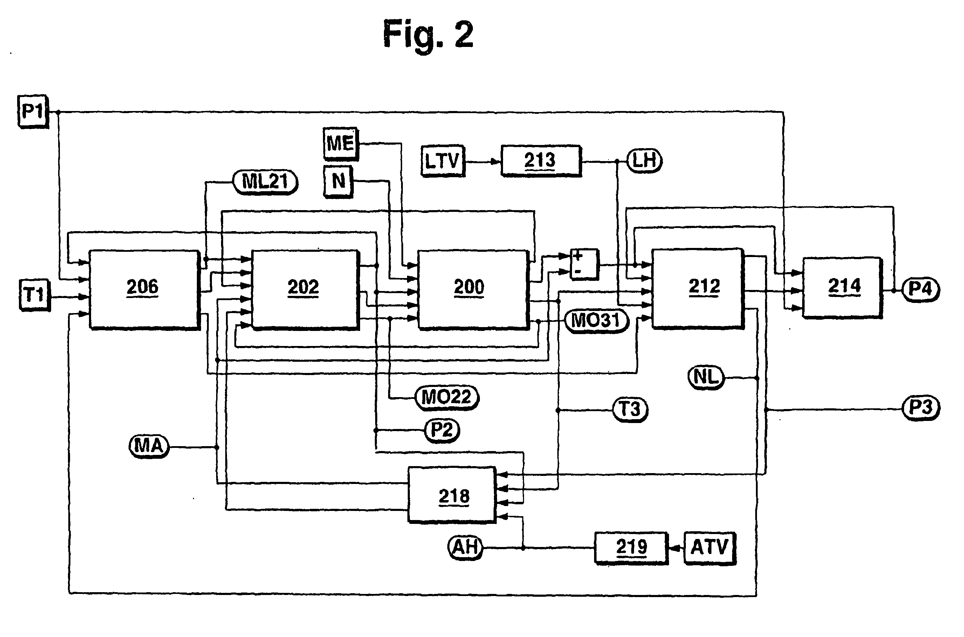

Das Gesamtmodell des Luftsystems und die Aufteilung in die Teilmodelle des Luftsystems ist in Figur 2 dargestellt.

Bei modernen Brennkraftmaschinen werden zunehmend höhere Anforderungen an die Abgas- und Verbrauchswerte gestellt. Der Turbolader mit variabler Turbinengeometrie erlaubt durch Verstellen der Turbinenleitschaufeln eine Anpassung an den aktuellen Motorbetriebspunkt. Dadurch kann ein verzögertes Ansprechen des Turboladers vermieden und gleichzeitig der Wirkungsgrad der Brennkraftmaschine verbessert werden. Gleichzeitig wird über die Abgasrückführung eine exakt geregelte Menge Abgas in die Hochdruckfrischluftleitung zurückgeführt, wodurch die Stickoxydemissionen erheblich gesenkt werden.

Dadurch ergibt sich bei modernen Brennkraftmaschinen ein Luftsystem, daß sich durch einen hohen Grad der inneren Kopplung und starken Nichtlinearitäten auszeichnet. Wesentliche Größen des Luftsystems, wie beispielsweise der Druck in der Hochdruckabgasleitung, der auch als Abgasgegendruck P3 bezeichnet wird, oder die aktuell rückgeführte Abgasmenge MA, lassen sich meßtechnisch nur sehr aufwendig oder gar nicht bestimmen. Entsprechende Sensoren stehen nicht oder nur unter sehr hohen Kosten zur Verfügung.

Bei heutigen Systemen werden die Sensorsignale bei der Regelung des Luftsystems exklusiv genutzt. D.h. das Luftmengensignal bzgl der Luftmenge ML21, die durch die Niederdruckfrischluftleitung 108 fließt, wird lediglich zur Steuerung oder Regelung der Position des Abgasrückführventils 118 verwendet. Der gemessene Ladedruck P2 dient lediglich zur Beeinflussung des Stellers der Turbine 112.

Die systembedingten Querkopplungen werden bei heutigen Systemen nicht berücksichtigt, und wirken sich daher als Störgröße in den einzelnen Regelkreisen aus.

Mit dem erfindungsgemäßen Verfahren und der erfindungsgemäßen Vorrichtung wird die bekannte Systemdynamik näherungsweise mit Modellen beschrieben. Dabei wird das reale Verhalten so abstrahiert, daß die verbleibenden Modelle in Echtzeit im Motorsteuergerät berechnet werden können. Trotz der Vereinfachung der Modelle ist dabei gewährleistet, daß die für die Regelung wesentlichen physikalischen Effekte und Kopplungen zwischen den einzelnen Systemen korrekt wiedergegeben werden.

Die physikalischen Zusammenhänge werden stark vereinfacht. Das erfindungsgemäße Modell des gesamten Luftsystems, das mehrere Teilmodelle umfaßt, kann zur Lösung verschiedener Aufgaben verwendet werden. So können beispielsweise nicht meßbare Signale des Luftsystems bzw. nur schwer meßbare Signale des Luftsystems näherungsweise aus vorhandenen Sensordaten oder Stellgrößen berechnet werden. Vorhandene Sensorinformationen können optimal verknüpft und so die Meßunsicherheit vermindert werden. Die gemessenen Größen und die erfaßten Größen können ohne Phasenverlust, d.h. ohne Dynamikeinbußen gefiltert werden. Bei Ausfall eines Sensors steht ein physikalisch sinnvoller Ersatzwert zur Verfügung. Desweiteren können Funktionsstrukturen stark vereinfacht werden, indem modellierte, nicht meßbare Größen verarbeitet werden. Beispielsweise kann eine Überwachung des Laders dadurch erfolgen, daß die geschätzte Laderdrehzahl ausgewertet wird.

In Figur 2 ist das gesamte Modell anhand eines Blockdiagrammes dargestellt. Im wesentlichen beinhaltet das Gesamtmodell verschiedene Teilmodelle für die einzelnen Komponenten des Luftsystems. Ein Teilmodell für den Verdichter 106 ist mit 206 bezeichnet. Ein Teilmodell 202, daß die Hochdruckfrischluftleitung 102 modelliert, ist als Modell-Hochdruckfrischluftleitung bezeichnet. Der Ladeluftkühler ist in dem Modell Verdichter 206 mitberücksichtigt. Ein weiteres Teilmodell 200 modelliert die Brennkraftmaschine 100 und wird auch als Zylindermodell bezeichnet. Ein weiteres Teilmodell 212 wird als Turbinenmodell bezeichnet und modelliert das Verhalten der Turbine 112. Ein weiteres Teilmodell 218 modelliert die Abgasrückführung und wird auch als Abgasrückführmodell 218 bezeichnet. Ein weiteres Teilmodell 214 modelliert die Auspuffleitung 114 und wird auch als Niederdruckabgasleitungsmodell bezeichnet.

Die Eingangsgrößen des Gesamtmodells sind vorzugsweise das Tastverhältnis LTV mit dem der Ladersteller 113 beaufschlagt wird, die eingespritzte Kraftstoffmenge ME, die aktuelle Motordrehzahl N, das Tastverhältnis ATV, mit dem der Abgasrückführsteller 118 beaufschlagt wird, der Atmosphärendruck P1 und die Umgebungslufttemperatur T1. Diese Eingangsgrößen sind in der Figur 2 mit kleinen Quadraten bezeichnet.

Anstelle dieser Größen können auch diese Größen charakterisierende Signale verwendet werden. So kann beispielsweise an Stelle der eingespritzten Kraftstoffmenge auch die einzuspritzende Kraftstoffmenge oder ein Signal, das die Einspritzdauer angibt verwendet werden. Anstelle der Tastverhältnisse kann beispielsweise unmittelbar der Hub der Steller verwendet werden.

Als Ausgangsgröße kann jede im Modell berechnete Größe verwendet werden, falls diese bei der Steuerung der Brennkraftmaschine benötigt wird. Besonders vorteilhaft ist die Verwendung der folgenden Ausgangsgrößen. Dies sind der Ladedruck P2, der dem Druck in der Hochdruckfrischluftleitung 102 entspricht, der Abgasgegendruck P3, der dem Druck in der Hochdruckabgasleitung 110 zwischen der Turbine 112 und der Brennkraftmaschine 100 entspricht, der Hub LH des Laderstellers 113 der Turbine 112, der Drehzahl NL des Laders, dem Luftmengenstrom ML21 über den Verdichter 106, der Abgastemperatur T3 vor der Turbine, dem Abgasgegendruck P4, der dem Druck P4 in der Auspuffleitung nach der Turbine entspricht, dem Hub AH des Abgasrückführstellers 118, dem Luftmengenstrom MA über die Abgasrückführleitung 116, dem Sauerstoffanteil M031 nach der Verbrennung und dem Sauerstoffanteil vor der Verbrennung M022.

Durch einfache Umrechnung vorzugsweise mit Normierungskonstanten können noch weitere Signale, die die entsprechenden Größen charakterisieren, bestimmt werden.

Einige dieser über das Modell bestimmte Größen lassen sich an der Brennkraftmaschine nicht oder nur sehr aufwendig messen. Für andere Größen, wie zum Beispiel dem Ladedruck P2, liegen Sensorsignale vor. Durch den Vergleich der gemessenen und der mittels des Modells berechneten Größe kann das Modell mit der aktuellen Situation abgeglichen werden.

Die Ausgangsgrößen des Modells bzw. der Teilmodelle sind mit Kreisen bzw. mit Ellipsen markiert.

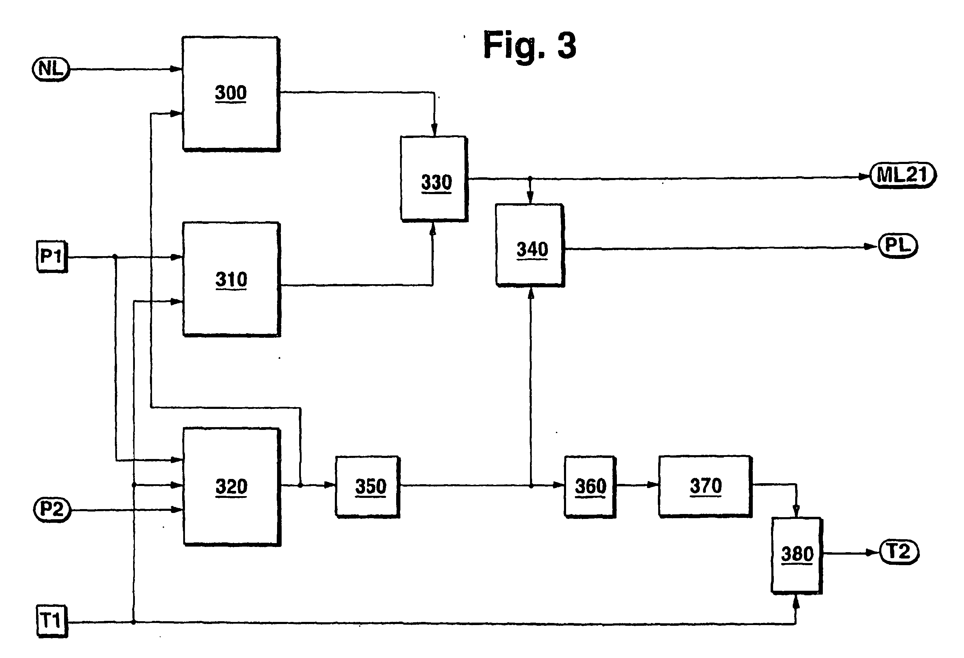

In Figur 3 ist das Modell des Verdichters, der auch die Eigenschaften des Ladeluftkühlers berücksichtigt, detaillierter dargestellt. Als Eingangsgrößen verarbeitet der Verdichter Signale, die verschiedene Größen charakterisieren. Dies sind die Laderdrehzahl NL, die Umgebungstemperatur T1, die der Temperatur vor dem Verdichter entspricht, der Umgebungsdruck P1, der dem Druck vor dem Verdichter entspricht, und der Ladedruck P2, der dem Druck nach dem Verdichter entspricht. Ausgehend von diesen Signalen werden verschiedene Ausgangsgrößen bestimmt. Dies sind im wesentlichen die an der Welle 111 aufgenommene mechanische Leistung PL, die Ladelufttemperatur T2, der der Temperatur des komprimierten Gases nach dem Ladeluftkühler entspricht, sowie der Luftmenge ML21, die durch den Verdichter bzw. durch die Ansaugleitung 108 strömt.

Die Laderdrehzahl NL wird einer Volumenstrombestimmung 300 zugeführt. Der Umgebungsdruck P1 wird einer Dichtebestimmung 310 und einer Enthalpiebestimmung 320 zugeleitet. Der Ladedruck P2 gelangt ebenfalls zu der Enthalpiebestimmung 320. Die Umgebungstemperatur T1 vor dem Verdichter wird einer Temperaturbestimmung 380, der Enthalpiebestimmung 320 und der Dichtebestimmung 310 zugeleitet. Das Ausgangssignal der Volumenstrombestimmung 300 und das Ausgangssignal der Dichtebestimmung 310 gelangen zu einer Massenstrombestimmung 330, die als Ausgangssignal der Luftmassenstrom ML21 bestimmt. Das Ausgangssignal der Enthalpiebestimmung 320 gelangt zum einen zur Volumenbestimmung 300 und zu einer Energiebestimmung 350. Mit dem Ausgangssignal der Energiebestimmung 350 wird eine Leistungsbestimmung 340 und eine Temperaturbestimmung 360 beaufschlagt. Der Leistungsbestimmung 340 wird zusätzlich die Luftmassenstrom ML21 zugeleitet. Die Leistungsbestimmung 340 liefert das Signal PL bzgl. der an der Welle aufgenommenen mechanischen Leistung. Die Temperaturbestimmung 360 beaufschlagt das Ladeluftkühlermodell 370, das wiederum die Temperaturermittlung 380 beaufschlagt. Die Temperaturermittlung 380 bestimmt das Temperatursignal T2.

Der Volumenstrom, der durch den Verdichter fließt, wird abhängig von der Laderdrehzahl und der Enthalpiedifferenz zwischen der Niederdruck und der Hochdruckseite, d.h. zwischen der Hochdruckfrischluftleitung 102 und der Niederdruckfrischluftleitung 108 berechnet. Die Enthalpiedifferenz wird von der Enthalpiebestimmung 320 bereitgestellt. Dabei steigt der Volumenstrom mit der Laderdrehzahl an und sinkt bei steigender Enthalpiedifferenz ab. Dieser Zusammenhang wird in der Volumenbestimmung 300 mittels eines Kennfelds oder einer Berechnung nachgebildet. Mittels verschiedener Konstanten folgt die Anpassung an spezifische Eigenschaften des Verdichters.

Die Dichtebestimmung 310 bestimmt ausgehend von dem Druck P1 und der Temperatur T1 vor dem Verdichter die Dichte des Gases vor dem Verdichter in der Niederdruckfrischluftleitung 108. Die Mengenbestimmung 330 bestimmt durch Multiplikation des Volumenstromes mit der Dichte des Luftmassenstroms ML21 über den Verdichter.

Die Enthalpiebestimmung 320 bestimmt die Enthalpiedifferenz des Gases vor und nach dem Verdichter abhängig von der Temperatur T1 vor dem Verdichter und dem Verhältnis des Druckes P1 vor dem Verdichter und dem Druck P2 nach dem Verdichter. Zusätzlich werden verschiedene Konstanten, wie die Gaskonstante und der Isotropenexponent berücksichtigt.

Durch Division der Enthalpiedifferenz durch den Verdichterwirkungsgrad bestimmt die Energiebestimmung 350 die Energie, die einer bestimmten Menge komprimierten Gases zugeführt wird. Der Verdichterwirkungsgrad ist vorzugsweise in einem Speicher abgelegt. In der Leistungsbestimmung 340 wird die Energie mit dem durch den Verdichter strömenden Luftmassenstrom ML21 multipliziert. Aus dieser Multiplikation ergibt sich die augenblicklich an der Welle entnommene mechanische Leistung PL.

Die Temperaturbestimmung 360 berechnet die dem Gas beim Komprimieren zugeführte Energie, die Erwärmung des Gases im Verdichter. Durch den Ladeluftkühler 104 wird ein Teil dieser Wärme dem Gas wieder entzogen. Dies berücksichtigt das Ladeluftkühlermodell 370. Der Anteil der Wärme, der dem Gas entzogen wird, ist um so größer, je höher die Effektivität des Ladeluftkühlers ist. D.h. abhängig von der Effektivität des Ladeluftkühlers wird die in der Temperaturbestimmung 360 ermittelte Temperatur verringert. In der Temperaturermittlung 380 wird zu dieser Temperatur, um die sich die Luft im Verdichter erwärmt, die Temperatur des Gases vor dem Verdichter T1 hinzuaddiert, wodurch man die Temperatur T2 des Gases nach dem Verdichter bzw. nach dem Verdichter und dem Ladeluftkühler erhält. Soll das Modell an einen Motor ohne Ladeluftkühler angepaßt werden, so wird die Effektivität des Kühlers zu Null gesetzt, d.h. es wird im Ladeluftkühlermodell 370 der Wert Null subtrahiert.

Es ergibt sich der Luftmassenstrom ML aus der Dichte und dem Volumenstrom der Luft, die über den Verdichter strömt. Die Dichte bestimmt sich aus der Temperatur T1 und dem Druck P1 der Umgebungsluft. Der Volumenstrom der Luft ergibt sich aus der Laderdrehzahl und der Enthalphiedifferenz an dem Einlaß und dem Auslaß des Verdichters. Dabei berechnet sich die Enthalpiedifferenz aus der Druckdifferenz und der Temperatur T1 des Gases. Dies bedeutet, ausgehend von der Laderdrehzahl NL, dem Umgebungsdruck P1, dem Ladedruck P2 und der Umgebungstemperatur T1 bestimmt das Verdichtermodell der Luftmassenstrom ML21, der über den Verdichter strömt, die Laderleistung PL und die Ladelufttemperatur.

Besonders vorteilhaft ist es, daß lediglich die Temperatur T1 und der Druck P1 mittels Sensoren gemessen werden, die übrigen Größen werden mittels anderer Modelle bestimmt.

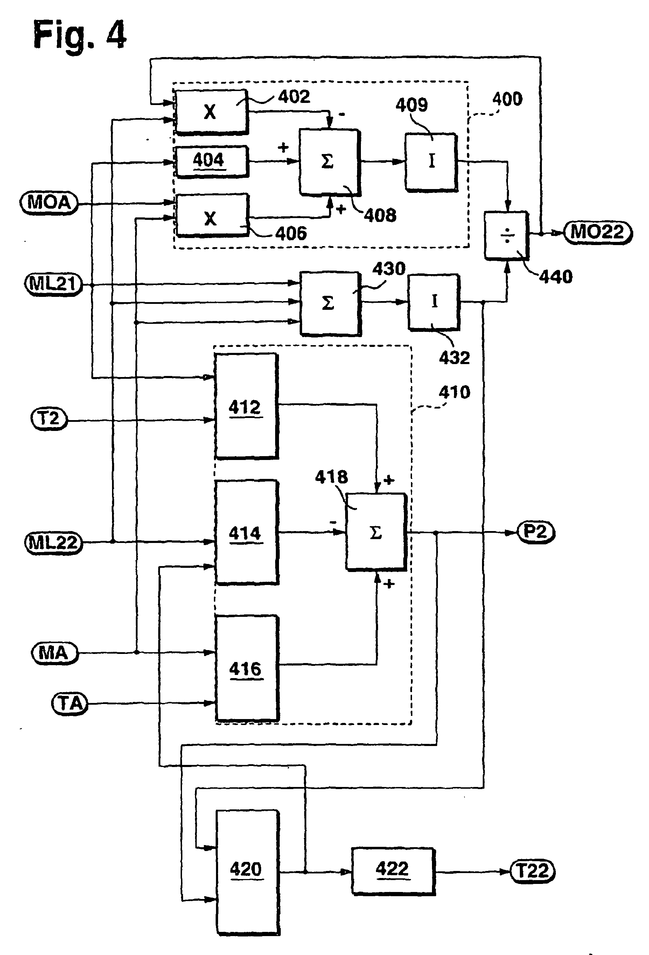

In der Figur 4 ist das Teilmodell für die Hochdruckfrischluftleitung, d.h. das Modell für die Ansaugleitung 102 als Blockdiagramm dargestellt. Die Zuleitung zwischen dem Verdichter 106 und dem Einlaßventil in den Zylinder wird als Behälter modelliert, in dem die Zustandsgrößen des Gases über die ideale Gasgleichung verknüpft sind. Die Strömungsgeschwindigkeit der Frischluft und alle daraus resultierenden Effekte werden zugunsten der Einfachheit des Modells vernachlässigt. Als Eingangsgrößen für dieses Modell werden vorzugsweise verwendet, die Luftmenge ML21, die aus dem Verdichter strömt, die Ladelufttemperatur T2 des Gases nach dem Ladeluftkühler 104, der Luftmenge ML22, die in die Brennkraftmaschine strömt, die Luftmenge MA, die Abgas in die Hochdruckfrischluftleitung 102 zurückgeführt wird, die Temperatur TA in der Abgasrückführung, die der Temperatur des rückgeführten Abgases entspricht, und der Sauerstoffanteil MOA im rückgeführten Abgas.

Ausgehend von diesen Eingangsgrößen werden durch physikalisch motivierte Verknüpfungen die Ausgangsgrößen berechnet. Als Ausgangsgrößen werden bestimmt, der Ladedruck P2 in der Hochdruckfrischluftleitung 102, die Ladelufttemperatur T2 in der Hochdruckfrischluftleitung und der Sauerstoffanteil M02, der der Brennkraftmaschine zugeführten Luft.

Das Teilmodell für die Hochdruckfrischluftleitung 102 beinhaltet im wesentlichen eine Sauerstoffmengenbestimmung 400, eine Druckbestimmung 410, eine Temperaturbestimmung 420 sowie eine Integration 432, die die Gesamtmasse bestimmt.

Die Sauerstoffmengenbestimmung 400 beinhaltet im wesentlichen eine erste Sauerstoffmengenbestimmung 402, eine zweite Sauerstoffmengenbestimmung 404 und eine dritte Sauerstoffmengenbestimmung 406, deren Ausgangssignale von einer Summation 408 mit entsprechenden Vorzeichen aufsummiert und anschließend von einer Integration 409 integriert werden. Der ersten Sauerstoffmengenbestimmung werden die Luftmenge ML22, die der in die Brennkraftmaschine gelangenden Luftmenge entspricht und der Sauerstoffanteil M022 der Luft, die in die Brennkraftmaschine gelangt, zugeleitet. Der zweiten Sauerstoffmengenbestimmung 404 wird das Signal ML21 bezüglich der vom Verdichter gelieferten Luftmenge zugeleitet. Der dritten Sauerstoffmengenbestimmung wird das Signal MOA bezüglich des Sauerstoffanteils in der Abgasrückführleitung und das Signal MA bezüglich der in der Abgasrückführleitung strömenden Luftmenge zugeleitet.

Durch Multiplikation der jeweiligen Luftmenge mit den Sauerstoffanteilen bestimmen die erste, die zweite und dritte Sauerstoffmengenbestimmung die Sauerstoffmengen der jeweiligen Luftmengen. Die zweite Sauerstoffmengenbestimmung multipliziert dabei die Luftmenge ML21 mit einem festen Faktor, der dem Sauerstoffanteil in der normalen Umgebungsluft entspricht. Die verschiedenen Sauerstoffmengen werden vorzeichenrichtig, d.h. die zuströmenden mit Plus und die abströmenden mit Minus integriert.

Von der Addition 430 und dem Integrator 432 werden die Luftmengen, die in die Hochdruckfrischluftleitung 102 einströmen und ausströmen ebenfalls vorzeichenrichtig integriert. Daraus ergibt sich die momentane Gesamtluftmenge im Behälter. Ausgehend von dieser Gesamtluftmenge im Behälter und dem Sauerstoffanteil Hochdruckfrischluftleitung 102, die von der Sauerstoffmengenbestimmung 400 bestimmt wird, ergibt sich der Sauerstoffanteil M022, der in die Brennkraftmaschine strömenden Luftmenge.

Aus den einzelnen Mengenströmen der jeweiligen Temperatur, dem Volumen und der Gaskonstante R wird die Änderung der Partialdrücke in der Hochdruckfrischluftleitung 102 berechnet. Die erste Partialdruckbestimmung 412 berechnet den Partialdruck ausgehend von dem Luftmenge ML21, die durch den Verdichter 106 einströmt und der Temperatur T2 nach dem Ladeluftkühler 104. Die zweite Partialdruckbestimmung 414 bestimmt den Partialdruck ausgehend von der Luftmenge ML22, die in die Brennkraftmaschine einströmt, und der Temperatur T22, die der Temperatur der Luftmenge unmittelbar vor der Brennkraftmaschine entspricht. Diese Temperatur wird auch als Mischtemperatur T22 bezeichnet. Die dritte Partialdruckbestimmung 416 bestimmt den Partialdruck ausgehend von der Luftmenge MA, die durch die Abgasrückführleitung 116 strömt, und der Temperatur TA in der Abgasrückführleitung. Die Partialdruckberechnungen sind vorzugsweise als Berechnungen ausgebildet, die die Größen ausgehend von den Eingangsgrößen gemäß einer Formel berechnen.

Mit zunehmender Luftmenge und/oder steigender Temperatur steigt der Partialdruck jeweils an. Von der Summation 418 werden die Änderungen der Partialdrücke vorzeichenrichtig addiert. Die zuströmenden Anteile gehen mit positivem Vorzeichen und die abströmenden Anteile gehen mit negativem Vorzeichen ein. Somit ergibt sich die Änderung des Druck P2 in der Hochdruckfrischluftleitung. Durch Integration der Druckänderung über der Zeit ergibt sich der aktuelle Ladedruck P2.

Ausgehend von dem so bestimmten Druck P2 in der Hochdruckfrischluftleitung, der wie oben beschrieben berechnet wurde, und der von dem Integrierer 432 berechneten Gasmenge bestimmt die Temperaturbestimmung 420 mittels der idealen Gasgleichung unter Verwendung der Gaskonstanten R unmittelbar die Mischtemperatur T22.

Das Modell der Hochdruckfrischluftleitung bestimmt den Ladedruck P2, den Sauerstoffanteil M022, des Gases, das in die Brennkraftmaschine strömt und die Mischtemperatur T22 ausgehend von den Luftmengen ML21, ML22 und MA und deren Sauerstoffanteilen, die in oder aus der Hochdruckfrischluftleitung strömen, der Ladelufttemperatur T2 und der Temperatur TA in der Abgasrückführleitung.

Erfindungsgemäß ergibt sich der Sauerstoffanteil MO22 in der Luftmenge ML22, die in die Brennkraftmaschine strömt, aus der Luftmenge ML22, der Luftmenge ML21, die über den Verdichter strömt, der Luftmenge MA, der in der Abgasrückführleitung strömt, den jeweiligen Sauerstoffanteilen und verschiedenen Konstanten. Der Ladedruck P2 ergibt sich vorzugsweise durch Integration der Beiträge zur Druckänderung, die durch die zuströmenden bzw. abströmenden Luftmengen und deren Temperaturen verursacht sind.

Besonders vorteilhaft ist es, daß lediglich die Ladelufttemperatur T2 mittels eines Sensors gemessen wird, die übrigen Größen werden mittels anderer Modelle bestimmt. Bei einer besonders vorteilhaften Ausgestalten wird die Ladelufttemperatur mittels des Verdichtermodells bestimmt.

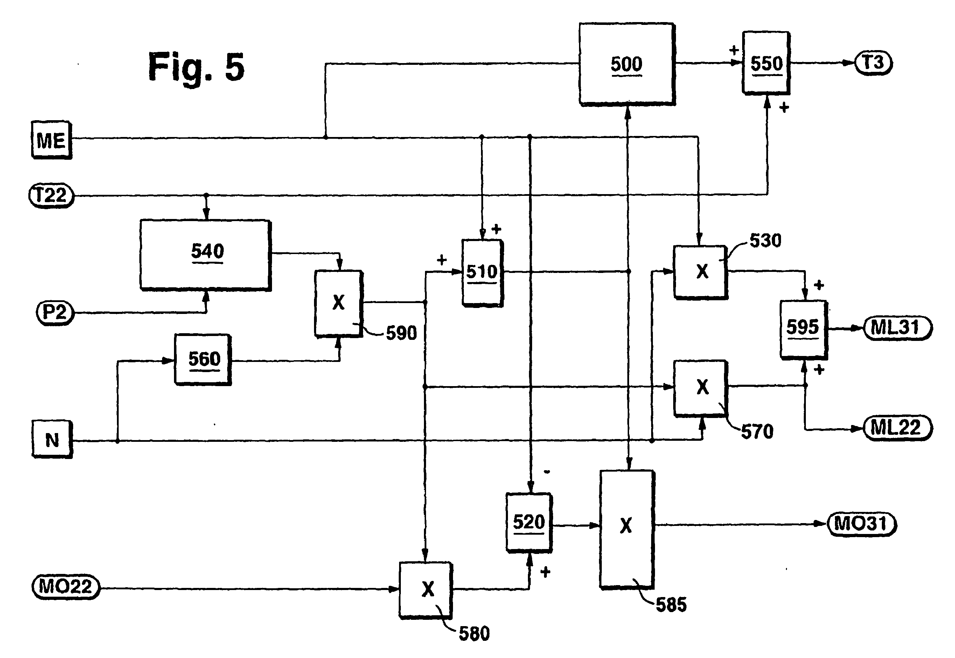

In der Figur 5 ist das Zylindermodell 200 detaillierter dargestellt. Als Eingangsgrößen werden dem Zylindermodell 200 Signale zugeführt. Dies sind ein Signal ME, das die einzuspritzenden oder die eingespritzte Kraftstoffmenge charakterisiert, die Mischtemperatur T22, dies ist die Temperatur der Luft, die dem Zylinder zugeführt wird, der Ladedruck P2, der dem Druck vor dem Zylinder entspricht, die Drehzahl N der Brennkraftmaschine und der Sauerstoffanteil MO22 der Luft, die der Brennkraftmaschine zugeführt wird.

Als Ausgangsgrößen liefert das Modell verschiedene Signale, die die folgenden Größen charakterisieren. Dies sind die Abgastemperatur T3, dieses Signal charakterisiert die Temperatur des Gases in der Hochdruckabgasleitung 110, die Luftmenge ML31, die aus der Brennkraftmaschine in die Hochdruckabgasleitung 110 strömt, die Luftmenge ML22, die in die Brennkraftmaschine strömt, und der Sauerstoffanteil MO31, der Luftmenge ML31, die aus der Brennkraftmaschine ausströmt.

Die einzuspritzende Kraftstoffmenge ME gelangt zum einen zu einer Erwärmungsbestimmung 500, zu einem Additionspunkt 510, mit negativem Vorzeichen zu einem Additionspunkt 520 und zu einem Multiplikationspunkt 530. Die Mischtemperatur T22 gelangt zum einen zu einer Ansaugmengenberechnung 540 und zum anderen zu einem Additionspunkt 550. Der Ladedruck P2 gelangt zu der Ansaugmengenberechnung 540. Das Drehzahlsignal N gelangt zum einen zu einer Füllgradkorrektur 560 und zum anderen zu einem Multiplikationspunkt 570. Der Sauerstoffanteil MO22 gelangt zu einem Verknüpfungspunkt 580.

Die Ausgangssignale der Füllgradkorrektur 560 und der Ansaugmengenberechnung 540 werden einem Multiplikationspunkt 590 zugeleitet, der wiederum den Additionspunkt 510, den Multiplikationspunkt 570 und den Multiplikationspunkt 580 beaufschlagt.

Der Additionspunkt 550 stellt die Abgastemperatur T3 zur Verfügung. Das Ausgangssignal des Multiplikationspunkts 530 und das Ausgangssignal des Multiplikationspunkts 570 gelangen zu einem Additionspunkt 595, der die Luftmenge ML31 bereitstellt. Am Ausgang des Multiplikationspunkts 570 liegt die Luftmenge ML22 an. Der Sauerstoffanteil M031 bildet das Ausgangssignal eines Multiplikationspunkts 585, der das Ausgangssignal des Additionspunkts 520 durch das Ausgangssignal des Additionspunkts 510 dividiert.

Bei bekanntem Hubraum der Brennkraftmaschine berechnet die Ansaugmengenberechnung 540 aus dem Ladedruck P2 und der Mischtemperatur T2, der in die Brennkraftmaschine einströmenden Frischluft, mit Hilfe der idealen Gasgleichung die theoretisch mögliche Gasmenge im Zylinder. Diese steigt proportional zum Ladedruck P2 an und fällt ab, wenn die Temperatur der Luft ansteigt. Diese theoretische Zylinderfüllung wird mittels der aktuellen Drehzahl N ausgehend von dem Signal der Füllungskorrektur 560 im Multiplikationspunkt 590 korrigiert, wodurch die dynamischen Effekte beim Befüllen des Zylinders berücksichtigt werden. Aus der so gewonnenen Gasmenge pro Hub und der Drehzahl N berechnet der Verknüpfungspunkt 570, vorzugsweise mittels einer Multiplikation der beiden Größen und/oder eine Multiplikation mit diversen Konstanten, die Luftmenge ML22, die in die Brennkraftmaschine einströmt.

Die Luftmenge ML31, die dem Abgasmengenstrom entspricht, ergibt sich durch Addition aus der Luftmenge ML22, die in die Brennkraftmaschine strömt, und dem Kraftstoffmengenstrom im Verknüpfungspunkt 595. Der Kraftstoffmengenstrom wird durch Verknüpfung der einzuspritzenden Kraftstoffmenge ME und der Drehzahl N im Verknüpfungspunkt 530 bestimmt. Hierzu werden die beiden Signale miteinander und mit verschiedenen Konstanten multipliziert.

Die Erwärmungsbestimmung 500 berechnet die Erwärmung der Zylinderladung in Abhängigkeit von der eingespritzten Kraftstoffmenge ME und der Gasmenge im Zylinder. Je mehr Kraftstoff eingespritzt wird und je weniger Gas im Zylinder ist, desto größer ist die Erwärmung. Der motorspezifische Zusammenhang zwischen eingespritzter Kraftstoffmenge ME und der dem Gas zugeführten Wärme wird durch ein Kennfeld berücksichtigt. Die Abgastemperatur T3 ergibt sich dann durch Addition im Additionspunkt 550 des Ausgangssignals der Erwärmungsbestimmung 500 und der Temperatur der Ladelufttemperatur T2.

Die Gesamtgasmenge im Zylinder ergibt sich durch Addition der einzuspritzenden Kraftstoffmenge und der Gasmenge pro Hub, die vom Verknüpfungspunkt 590 am Additionspunkt 510 bereitgestellt wird.

Aus dem Sauerstoffgehalt M022 der dem Zylinder zugeführten Luftmenge und der Gesamtgasmenge, die dem Ausgangssignals dem Verknüpfungspunkt 590 entspricht, berechnet der Verknüpfungspunkt 580 die Sauerstoffmenge im Zylinder vor der Verbrennung. In erster Näherung ist die der Zylinderladung entzogene Sauerstoffmenge proportional zur eingespritzten Kraftstoffmenge ME. Die Sauerstoffmenge nach der Verbrennung ergibt sich durch Subtraktion dieser von der Kraftstoffmenge abhängenden Sauerstoffmenge im Verknüpfungspunkt 520 von der Sauerstoffmenge im Zylinder vor der Verbrennung. Am Ausgang des Verknüpfungspunkts 520 liegt somit die Sauerstoffmenge nach der Verbrennung an. Durch die Verhältnisbildung im Verknüpfungspunkt 585 dieser Sauerstoffmenge mit der Gesamtgasmenge, die dem Ausgangssignal des Verknüpfungspunktes 510 entspricht, ergibt sich der Sauerstoffanteil MO31 nach der Verbrennung.

Es wird ausgehend von der einzuspritzenden Kraftstoffmenge ME und der Mischtemperatur T22, die Abgastemperatur T3 bestimmt. Die Mischtemperatur entspricht der Temperatur des Gases, das in die Brennkraftmaschine strömt. Die Abgastemperatur entspricht der Temperatur des Gases, das die Brennkraftmaschine verläßt. Ferner werden ausgehend von der Mischtemperatur T22 und dem Ladedruck P2 des in die Brennkraftmaschine einströmenden Gases, der Drehzahl N der Brennkraftmaschine und der einzuspritzenden Kraftstoffmenge ME die Luftmengen ML22 und ML31 berechnet, die in die Brennkraftmaschine einströmen und die aus der Brennkraftmaschine ausströmen. Diese Berechnung erfolgt im wesentlichen dadurch, daß ausgehend von Temperatur, Druck, Kraftstoffmenge, Drehzahl und bekannten Konstanten verschiedene Mengengrößen berechnet und anschließend geeignet miteinander verknüpft werden.

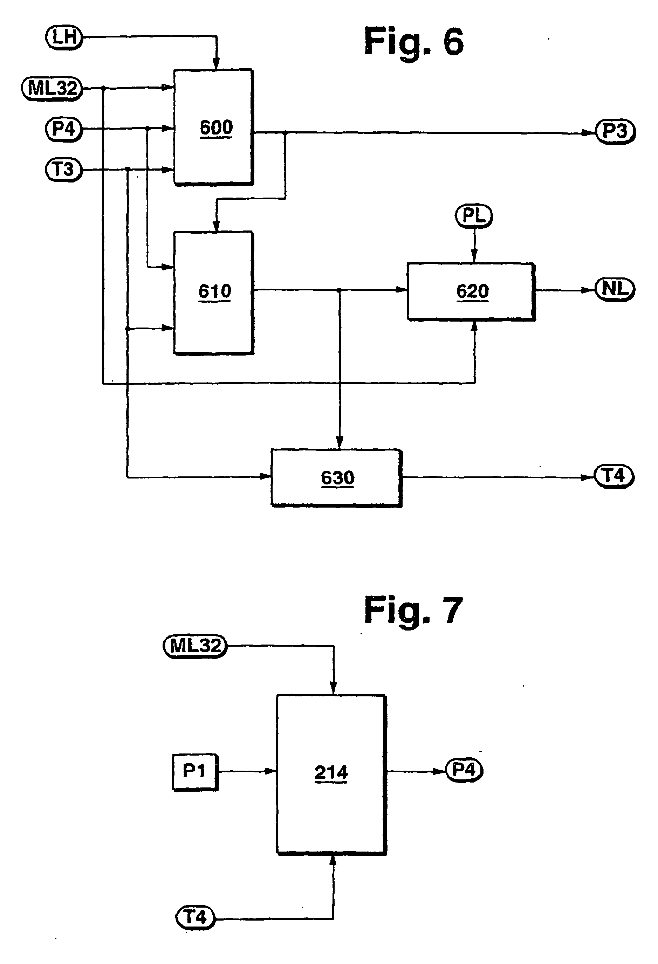

In der Figur 6 ist das Turbinenmodell 212 detaillierter dargestellt. In dem hier dargestellten Modell wird eine Turbine mit variabler Geometrie nachgebildet. Als Eingangsgrößen werden vorzugsweise verschiedene Signale verwendet, die die folgenden Betriebsgrößen charakterisieren. Dies sind die Luftmenge ML32, die über die Turbine strömt, der Druck P4 in der Auspuffleitung 114 ein Signal, das den Druck nach der Turbine charakterisiert, der Abgastemperatur T3, die die Gastemperatur vor der Turbine charakterisiert, der Laderhub, der die Position der Leitschaufeln charakterisiert, sowie ein an der Welle 111 aufgenommen Leistung PL, die die vom Lader aufgenommene mechanische Leistung charakterisiert.

Durch geeignete Verknüpfung dieser Größen und unter Berücksichtigung verschiedener physikalischer sowie systemspezifischer Konstanten ergeben sich verschiedene Ausgangsgrößen. Dies sind der Abgasdruck P3, der den Druck vor der Turbine charakterisiert, die Temperatur T4 in der Auspuffleitung, das heißt nach der Turbine und die Laderdrehzahl NL.

Der Laderhub LH, die Luftmenge ML32 über die Turbine, der Druck P4 in der Auspuffleitung und die Abgastemperatur T3 werden einer Druckbestimmung 600 zugeleitet. An dem Ausgang der Druckbestimmung 600 liegt der Abgasdruck P3 an. Der Druck vor der Turbine, der dem Abgasdruck P3 entspricht, und der Druck nach der Turbine, der dem Druck P4 entspricht, sowie die Abgastemperatur T3 werden einer Enthalpiedifferenzbestimmung 610 zugeleitet. Deren Ausgangssignal gelangt zu einer Laderdrehzahlbestimmung 620, die zusätzlich die Luftmenge ML32 über die Turbine und der Laderleistung PL verarbeitet. Als Ausgangsgröße liefert die Laderdrehzahlbestimmung 620 die Laderdrehzahl NL. Die Luftmenge ML32, die über die Turbine strömt, und das Ausgangssignal der Enthalpiedifferenzbestimmung 610 gelangen zu einer Temperaturbestimmung 630, die als Ausgangssignal die Temperatur T4 in der Auspuffleitung bereitstellt.

Ausgehend vom Laderhub LH, der die Position der Leitschaufeln der Turbine charakterisiert, wird vorzugsweise mittels einer Kennlinie die Position der Leitschaufeln in eine effektive Querschnittsfläche umgesetzt. Dabei entspricht eine geöffnete Position der Leitschaufeln einer großen Fläche. Bei bekannter effektiver Fläche wird ausgehend von der Luftmenge ML32, dem Druck P4 nach der Turbine, der Temperatur T3 vor der Turbine sowie verschiedener physikalischer Konstanten mittels der Druckbestimmung 600 der Druck vor der Turbine P3 berechnet. Diese Berechnungen erfolgen in der Druckbestimmung 600 mit Hilfe einer Formel.

Eine Erhöhung des Mengenstroms, der Temperatur T3 vor der Turbine und des Drucks P4 nach der Turbine führen jeweils zu einer Erhöhung des Drucks P3 vor der Turbine. Ein größerer effektiver Querschnitt führt dagegen zu einem Absinken des Drucks P3 vor der Turbine.

Ausgehend von dem Druck vor der Turbine P3, dem Druck nach der Turbine P4, der Temperatur T3 vor der Turbine, sowie verschiedener physikalischer Konstanten bestimmt die Enthalpiedifferenzbestimmung 610 die Enthalpiedifferenz des Gases vor und nach der Turbine. D.h. sie bestimmt die Energiedifferenz pro Gasmenge. Die Enthalpiedifferenz wächst mit dem Druckverhältnis zwischen dem Druck vor und dem Druck nach der Turbine und mit der Temperatur vor der Turbine.

Die momentan in der Turbine gewonnene Leistung ergibt sich als Produkt aus der Enthalpiedifferenz, dem Turbinenwirkungsgrad und der Luftmenge ML32 über die Turbine. Die Differenz aus Turbinen- und Laderleistung führt zu einer Veränderung der Rotationsenergie der Welle 111, d.h. zu einem Anstieg oder Abfall der Winkelgeschwindigkeit und damit der Laderdrehzahl NL. Dies wird über einen geeigneten Faktor in die Umdrehung bzw. die Drehzahl des Laders umgerechnet. Ausgehend von dieser Größe berechnet die Laderdrehzahlbestimmung 620 die Laderdrehzahl NL. Der Turbinenwirkungsgrad des Laders wird dabei vorzugsweise als konstante Größe angenommen oder kann in einem Kennfeld abgelegt sind.

Die Temperaturbestimmung bestimmt aus der Enthalpiedifferenz und dem Turbinenwirkungsgrad die dem Gas entnommene Energie. Über physikalische Konstanten ist die entnommene Energie direkt mit der Temperaturdifferenz vor und nach der Turbine verknüpft. Ausgehend von der Temperatur T3 vor der Turbine und dieser Temperaturdifferenz bestimmt die Abkühlungsbestimmung 630 die Temperatur T4 nach der Turbine.

Es wird der Abgasdruck P3 ausgehend von dem Laderhub LH, der Luftmenge ML32, die über die Turbine strömt, dem Druck P4 hinter der Turbine und der Abgastemperatur T3 bestimmt. Ausgehend von der Druckdifferenz über die Turbine, die sich aus dem Abgasdruck P3 und dem Druck P4 nach der Turbine berechnet, und der Abgastemperatur wird die Enthalpiedifferenz über die Turbine bestimmt. Ausgehend von der Enthalpiedifferenz und der Abgastemperatur T3 erfolgt die Berechnung der Temperatur T4 in der Auspuffleitung. Ausgehend von der Enthalpiedifferenz, der Laderleistung PL und der Luftmenge ML32, die über die Turbine strömt, wird die Laderdrehzahl bestimmt.

In Figur 7 ist das Modell des Auspuffleitung, d.h. der Niederdruckabgasleitung 114 dargestellt. Ausgehend von der Luftmenge ML32 über die Turbine, dem Umgebungsdruck P1 und der Temperatur T4 nach der Turbine in der Auspuffleitung bestimmt dieses Modell den Druck P4 nach der Turbine.

Das Modell des Abgastrakts 214 dient dazu, die Effekte des Abgastrakts auf den Druck nach der Turbine zu modulieren. Der gesamte Abgastrakt wird als räumlich konzentrierte Blende modelliert. Ausgehend von der effektiven Blendenfläche bestimmt das Modell 214 den Druck P4 nach der Turbine, der dem Druck oberhalb der Blende entspricht, ausgehend von der Luftmenge ML32, dem Umgebungsdruck P1, der dem Druck unterhalb der Blende entspricht, der Temperatur T4 oberhalb der Blende sowie zweier Stoffkonstanten.

Dabei steigt der Druck P4 nach der Turbine mit steigende Luftmenge ML32, steigendem Atmosphärendruck P1 und steigender Temperatur T4 nach der Turbine an. Eine größere effektive Fläche bewirkt ein Absinken des Drucks nach der Turbine. Vorzugsweise wird die effektive Blendenfläche als Konstante betrachtet.

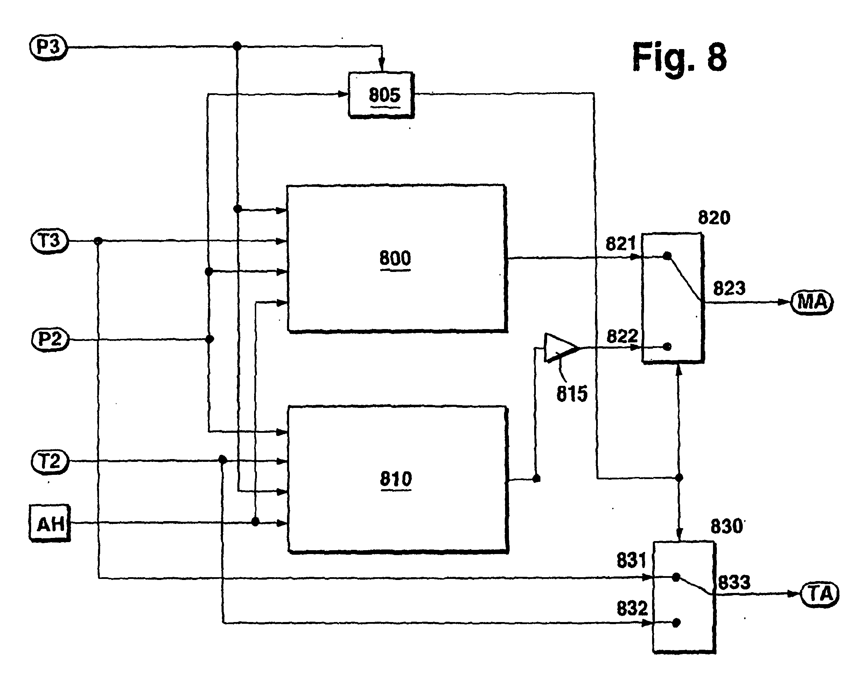

In Figur 8 ist das Abgasrückführmodell 218 detaillierter dargestellt. Das Abgasrückführmodell berücksichtigt die Veränderungen des Luftsystems, wenn ein Teil des Abgases wieder zurück in den Ansaugtrakt gelangt. Als Eingangssignale berücksichtigt das Abgasrückführmodell 218 Signale. Dies sind der Abgasdruck P3, der Druck in der Hochdruckabgasleitung charakterisiert, die Abgastemperatur T3, der Ladedruck P2, die Ladelufttemperatur T2, und der Abgasrückführhub AH, der den Hub des Abgasrückführventils 118 charakterisiert.

Ausgehend von diesen Größen werden durch geeignete Verknüpfung die Ausgangsgrößen bestimmt. Dies sind insbesondere die Luftmenge MA, die über das Abgasrückführventil 118 strömt, die Temperatur TA, die die Temperatur des Abgases kurz vor der Mischung mit dem Frischgas charakterisiert.

Der Ladedruck P2 und der Abgasdruck P3, die die Druckdifferenz über das Abgasrückführventil charakterisieren, werden einer Umschaltung 805 zugeleitet.

Alle Signale mit Ausnahme des Ladelufttemperatur T2 werden einer ersten Mengenbestimmung 800 zugeleitet. Alle Signale mit Ausnahme des Abgastemperatur T3 werden einer zweiten Mengenbestimmung 810 zugeleitet.

Die Abgastemperatur T3 und die Ladelufttemperatur T2 gelangen zum ersten Eingang 831 bzw. zum zweiten Eingang 832 einer zweiten Umschaltung 830.

Das Ausgangssignal der ersten Mengenbestimmung 800 gelangt zum ersten Eingang 821 und das Ausgangssignal 810 gelangt über eine Vorzeichenumkehr 815 zum zweiten Eingang 822 einer ersten Umschaltung 820.

Am Ausgang der ersten Umschaltung liegt die Luftmenge MA, die über das Abgasrückführventil strömt, an. Am Ausgang der zweiten Umschaltung 830 liegt Temperatur TA in der Abgasrückführleitung an. Die beiden Schaltmittel 820 und 830 werden abhängig vom Ausgangssignal der Umschaltung 805 angesteuert.

Die Mengenbestimmung 800 bzw. 810 bestimmen die Luftmenge MA, die über das Abgasrückführventil strömt, vorzugsweise mittels einer Drosselgleichung. Die Luftmenge MA, die über das Abgasrückführventil strömt, hängt im wesentlichen von dem Druck und der Temperatur vor dem Abgasrückführventil und dem Druck nach dem Abgasrückführventil und der effektiven Fläche des Abgasrückführventils ab.

Dabei steigt die Luftmenge mit steigender Druckdifferenz und mit steigender effektiver Fläche an.

Sie sinkt mit steigender Temperatur vor dem Ventil.

Die Richtung des Mengenstroms über das Abgasrückführventil hängt davon ab, ob der Abgasdruck P3 in der Hochdruckabgasleitung größer oder kleiner ist als der Ladedruck P2 in der Hochdruckfrischluftleitung. Aus diesem Grund sind zwei Mengenbestimmungen vorgesehen. Welche der beiden die Luftmenge vorgibt, wird durch die Stellung des Schaltmittels 820 bestimmt. Die Stellung des Schaltmittels 820 hängt von der Druckdifferenz über das Abgasrückführventil ab. Von dieser Druckdifferenz und damit auch von der Strömungsrichtung hängt es auch ab, welche Temperatur TA in der Abgasrückführleitung herrscht.

Die effektive Fläche der Drossel ist eine Funktion des Abgasrückführhubs AH des Abgasrückführventils und wird vorzugsweise in Form einer applizierbaren Kennlinie berücksichtigt. Ist der Abgasdruck P3 größer als der Ladedruck P2, so wird das Ausgangssignal der ersten Mengenbestimmung als Luftmenge MA verwendet und die Abgastemperatur T3 als Temperatur TA. Dies entspricht der in der Figur 8 dargestellten Stellung der Schaltmittel.

Ist dagegen der Ladedruck P2 größer als der Abgasdruck P3, so werden die Schaltmittel in die nicht eingezeichnete Stellung gebracht und das Ausgangssignal der zweiten Mengenbestimmung 810 bestimmt die Luftmenge MA bzw. die Temperatur TA entspricht der Ladelufttemperatur T2.

Es ergibt sich die Luftmenge MA, die durch das Abgasrückführventil strömt, ausgehend von der Druckdifferenz über das Abgasrückführventil, der Temperatur der Luft, die über das Abgasrückführventil strömt, und dem Abgasrückführhub AH. Die Druckdifferenz berechnet sich ausgehend von dem Abgasdruck P3 und dem Ladedruck P2. Abhängig von der Druckdifferenz wird wahlweise die Ladelufttemperatur T2 oder die Abgastemperatur T3 als Temperatur der Luft in der Abgasrückführleitung verwendet.

Die Steuerung der Abgasrückführung kann wesentlich verbessert werden, wenn ein Signal, das die Luftmenge, die über das Abgasrückführventil strömt, charakterisiert vorliegt. Ein Sensor, der ein solches Signal liefert, ist schwer zu realisieren, weil er durch seine Lage im Abgasmengenstrom zu sehr hohen Temperaturen und starker Verschmutzung ausgesetzt ist.

Bei heutigen Systemen wird eine indirekte Vorgehensweise gewählt. Dabei wird ein pneumatisch angesteuertes Abgasrückführventil so lange geöffnet oder geschlossen, bis die über einen Sensor gemessene Luftmenge ML21 ihren Sollwert erreicht. Die rückgeführte Abgasmenge ergibt sich aus der Differenz zwischen der Luftmenge ML22, die in die Brennkraftmaschine strömt, und Luftmenge ML21, die über den Verdichter strömt.

Diese Vorgehensweise hat zwei wesentliche Nachteile:

Bei kleinen rückgeführten Abgasmengen führen die Toleranzen des Sensors zur Erfassung der Luftmenge zu sehr großen Fehlern in der Abgasrückführrate. Der Regelkreis für das Abgasrückführventil enthält viele z.T. träge Komponenten, so daß die Dynamik beschränkt bleibt. Beide Effekte, d.h. große Toleranzen und unzureichende Dynamik führen zu verschlechterten Abgaswerten.

Bei Abgasrückführstellern mit einem integrierten Wegsensor wird mit einem unterlagerten Regelkreis die Position des Ventils sehr schnell und exakt eingeregelt.

In dem elektrischen Abgasrückführventil wird die nötige Kraft durch einen Elektromagneten erzeugt. Bei einer unterlagerten Lageregelung wird die aktuelle Position des Ventils über einen Wegsensor gemessen, und der Strom so lange variiert, bis das Ventil die gewünschte Position eingenommen hat. In dieser Endposition ist der Strom ein Maß für die nötige Haltekraft. Diese hängt wesentlich vom Druckunterschied vor/nach Ventil ab. Der Strom durch die Spule ist ein Meßsignal für den Druckunterschied über dem Abgasrückführventil.

Ausgehend von der bekannten Ventilgeometrie, dem Abgasrückführhub, und der Druckdifferenz wird der auf die Temperatur normierte Mengenstrom über das Ventil berechnet. Die Ventilgeometrie ist konstruktiv bestimmt. Der Hub ergibt sich aus dem integrierten Wegsensor. Die Druckdifferenz wird aus dem Spulenstrom abgeleitet.

Das in einem positionsgeregelten elektrischen Abgasrückführventil vorliegende Stromsignal dient zur Bestimmung der Druckdifferenz über dem Abgasrückführventil.

Aus Ladedruck P2, Druckdifferenz, Abgasrückführhub AH und Ventilgeometrie kann die temperaturnormierte Luftmenge MA, die über das Abgasrückführventil strömt, bestimmt werden.

Erfindungsgemäß dient dieser Wert als Istwert in einem unterlagerten Regelkreis für die Luftmenge MA. Hierdurch kann die temperaturnormierte Luftmenge, die über das Abgasrückführventil strömt, schnell und präzise eingestellt werden.

Durch die direkte Messung der Luftmenge MA sind kleinere Toleranzen bei der Steuerung der Abgasrückführrate realisierbar. Durch die unterlagerte Regelung der normierten Luftmenge MA ist eine wesentliche Verbesserung der Dynamik erreichbar.

Durch die Druckdifferenz zwischen Hochdruckabgasleitung und Hochdruckfrischluftleitung wirkt auf das Abgasrückführventil eine Gaskraft FP. Um das Ventil zu halten, muß diese Kraft durch die Kraft des Elektromagneten FM kompensiert werden. Diese Kraft hängt direkt vom Strom durch den Magneten ab $I_m$.

Damit ergibt sich die Meßgleichung für die Druckdifferenz:

$$P3 - P2 = f_1 (FM) = f_2 (AH, I_m)$$

Der nichtlineare Zusammenhang $f_2$ wird durch Messung auf einer geeigneten Prüfeinrichtung bestimmt. Ausgehend von dem bekannten Zusammenhang $f_2$, dem Hub AH und dem Strom $I_m$ durch den Elektromagneten wird die aktuelle Druckdifferenz bestimmt.

Der temperaturnormierte Mengenstrom über ein Ventil ergibt sich gemäß der Durchflußgleichung zu:

$$MA_{norm} = MA \sqrt{T3} = A(AH) \, P3 \psi \left( \frac{P3}{P2} \right)$$

Dabei bedeuten:

| | |
|---|---|
| $MA_{norm}$ | temp.-norm. Massenstrom |
| $MA$ | Massenstrom |
| $P2$ | Ladedruck |
| $P3$ | Abgasdruck |
| $T3$ | Abgastemperatur |
| $A(AH)$ | Drosselbeiwert |
| $\psi$ | Durchflußfunktion |

Die Variation des Drosselbeiwerts als Funktion des Hubs, sowie der genaue Verlauf der Durchflußfunktion muß vorab durch Messung auf einer geeigneten Prüfeinrichtung bestimmt werden.

Mittels der obigen Gleichung wird die temperaturnormierte Luftmenge errechnet. Aus der temperaturnormierten Luftmenge wird zusammen mit einem gemessenen oder geschätzten Wert für die Abgastemperatur T3 die Luftmenge MA, die über das Abgasrückführventil strömt, bestimmt. Diese Berechnung erfolgt beispielsweise in den Mengenbestimmungen 800 und 810.

Für diese Vorgehensweise sind die anderen Teilmodelle nicht unbedingt erforderlich. So kann der Ladedruck direkt gemessen und der Abgasdruck P3 ausgehend von der Druckdifferenz und dem Ladedruck P2 bestimmt werden. Die Druckdifferenz bestimmt sich dabei vorzugsweise aus dem Abgasrückführhub AH und dem Strom, der durch das Ventil fließt.

Die Bestimmung des Laderhubs LH ausgehend von dem Tastverhältnis LTV für den Lader erfolgt in dem Block 213. Die entsprechende Umsetzung des Ansteuersignals ATV für das Abgasrückführventil in den Abgasrückführhub AH des Abgasrückführventils erfolgt in dem Block 219 der Figur 2.

Der Block 213 und der Block 219 sind von ihrem Aufbau her ähnlich ausgebildet. Die beiden Blöcke unterscheiden sich lediglich in der Art der Umrechnung. Im wesentlich besteht er aus einem Kennfeld bzw. einer Umrechnung, die das jeweilige Tastverhältnis LTV bzw. ATV in einen Hub umrechnet. In einem ersten Schritt wird das Tastverhältnis auf physikalisch sinnvolle Wert zwischen 0 % und 100 % begrenzt. Die Dynamik des elektropneumatischen Wandlers ist asymmetrisch, d.h. der Hub des Stellers bewegt sich in die eine Richtung deutlich schneller als in die andere Richtung. Dies wird durch ein asymmetrisches PT1-Verzögerungsglied modelliert. D.h. für steigende und fallende Ausgangsgrößen AH oder LH sind unterschiedliche Zeitkonstanten aktiv. Der Ausgang des PT1-Glieds dient als Eingangsgröße einer zu applizierenden Kennlinie. Hier wird das verzögerte Tastverhältnis in einen relativen Hub zwischen 0 und 100 % umgerechnet. Dieser Hub LH bzw. AH dient dann als Eingangsgröße der verschiedenen Modelle.

**Patentansprüche**

1. Verfahren zur Steuerung einer Brennkraftmaschine mit einem Luftsystem, wobei mit wenigstens einem Modell wenigstens eine Größe, die das Luftsystem charakterisiert, bestimmt wird,

   - wobei Ausgangsgrößen mittels wenigstens einem ersten und einem zweiten Teilmodells ausgehend von Eingangsgrößen bestimmt werden dass als Eingangsgrößen des ersten Teilmodells neben wenigstens einer Ausgangsgröße eines zweiten Teilmodells zusätzlich eine Stellgröße und eine Messgröße berücksichtigt werden
   - dass die Messgröße den Zustand der Umgebungsluft charakterisiert dass die Stellgröße die einzuspritzende Kraftstoffmenge charakterisiert. wobei ein Teilmodell als Hochdruckfrischluftleitungsmodell ausgebildet ist, das wenigstens den Ladedruck (P2), den Sauerstoffanteil (MO22) der Luftmenge, die in die Brennkraftmaschine strömt, und die Mischtemperatur (T22) ausgehend von wenigstens den in eine Hochdruckfrischluftleitung strömenden Luftmengen (ML21, ML22 und MA), deren Sauerstoffanteilen, der Ladelufttemperatur (T2) und der Temperatur (TA) in der Abgasrückführleitung, bestimmt.

2. Verfahren zur Steuerung einer Brennkraftmaschine mit einem Luftsystem, wobei mit wenigstens einem Modell wenigstens eine Größe, die das Luftsystem charakterisiert, bestimmt wird,

   - wobei Ausgangsgrößen mittels wenigstens einem ersten und einem zweiten Teilmodells ausgehend von Eingangsgrößen bestimmt werden,
   - dass als Eingangsgrößen des ersten Teilmodells neben wenigstens einer Ausgangsgröße eines zweiten Teilmodells zusätzlich eine Stellgröße und eine Messgröße berücksichtigt werden,
   - dass die Messgröße den Zustand der Umgebungsluft charakterisiert dass die Stellgröße die einzuspritzende Kraftstoffmenge charakterisiert. wobei ein Teilmodell als Zylindermodell ausgebildet ist, das wenigstens die Abgastemperatur (T3), die Luftmenge (ML22), die in die Brennkraftmaschine strömt, und die Luftmenge (ML31), die aus der Brennkraftmaschine strömt, und deren Sauerstoffanteil (MO31) ausgehend von wenigstens der Kraftstoffmenge (ME), der Drehzahl (N), dem Ladedruck (P2), der Mischtemperatur (T22) und dem Sauerstoffanteil (MO22) der Luft, die in die Brennkraftmaschine strömt, berechnet.

3. Verfahren nach Anspruch 2, **dadurch gekennzeichnet, dass** die Abgastemperatur (T3) ausgehend von der Kraftstoffmenge (ME) und der Mischtemperatur (T22) bestimmt wird und/oder dass die Luftmengen (ML22 und ML31), die in die Brennkraftmaschine und aus der Brennkraftmaschine strömen ausgehend von der Temperatur (T22) und dem Druck (P2) des in die Brennkraftmaschine einströmenden Gases, der Drehzahl (N) und/oder der Kraftstoffmenge (ME) bestimmt werden. die Temperatur (T4) in der Auspuffleitung ausgehend von der Enthalpiedifferenz und der Abgastemperatur (T3) bestimmt und/oder dass die Laderdrehzahl ausgehend von der Enthalpiedifferenz, der Laderleistung (PL) und der Luftmenge (ML32), die über die Turbine strömt, bestimmt wird.

4. Verfahren zur Steuerung einer Brennkraftmaschine mit einem Luftsystem, wobei mit wenigstens einem Modell wenigstens eine Größe, die das Luftsystem charakterisiert, bestimmt wird,

   - wobei Ausgangsgrößen mittels wenigstens einem ersten und einem zweiten Teilmodells ausgehend von Eingangsgrößen bestimmt werden,
   - dass als Eingangsgrößen des ersten Teilmodells neben wenigstens einer Ausgangsgröße eines zweiten Teilmodells zusätzlich eine Stellgröße und eine Messgröße berücksichtigt werden,
   - dass die Messgröße den Zustand der Umgebungsluft charakterisiert,
   - dass die Stellgröße die einzuspritzende Kraftstoffmenge charakterisiert,
   - wobei ein Teilmodell als Auspuffleitungsmodell ausgebildet ist, das den Druck nach der Turbine ausgehend von wenigstens der Luftmenge (ML32), die über die Turbine strömt, dem Umgebungsdruck (P1) und der Temperatur (T4) nach der Turbine bestimmt.

5. Vorrichtung die Mittel umfasst, die dazu ausgebildet sind ein Verfahren gemäß wenigstens einem der Ansprüche 1 bis 4 durchzuführen.

**Claims**

1. Method for controlling an internal combustion engine having an air system, wherein at least one variable which characterizes the air system is determined by means of at least one model,

   - wherein output variables are determined by means of at least a first component model and a second component model on the basis of input variables,
   in that in addition to at least one output variable of a second component model, a manipulated variable and a measurement variable are additionally taken into account as input variables of the first component model,
   - in that the measurement variable characterizes the state of the ambient air,
   in that the manipulated variable characterizes the fuel quantity to be injected,
   wherein a component model is embodied as a high-pressure fresh air line model which determines at least the charge pressure (P2), the oxygen content (M022) of the air flow rate into the internal combustion engine and the mixing temperature (T22) on the basis of at least the air flow rates (ML21, ML22 and MA) flowing into a high-pressure fresh air line, the oxygen contents of said air flow rates (ML21, ML22 and MA), the charge air temperature (T2) and the temperature (TA) in the exhaust gas recirculation line.

2. Method for controlling an internal combustion engine having an air system, wherein at least one variable which characterizes the air system is determined by means of at least one model,

   - wherein output variables are determined by means of at least a first component model and a second component model on the basis of input variables,
   - in that in addition to at least one output variable of a second component model, a manipulated variable and a measurement variable are additionally taken into account as input variables of the first component model,
   - in that the measurement variable characterizes the state of the ambient air,
   in that the manipulated variable characterizes the fuel quantity to be injected,
   wherein a component model is embodied as a cylinder model which calculates at least the exhaust gas temperature (T3), the air flow rate (ML22) into the internal combustion engine and the air flow rate (ML31) out of the internal combustion engine, and the oxygen content (M031) of said air flow rates (ML22, ML31) on the basis of at least the fuel quantity (ME), the rotational speed (N), the charge pressure (P2), the mixing temperature (T22) and the oxygen content (M022) of the air flowing into the internal combustion engine.

3. Method according to Claim 2, **characterized in that** the exhaust gas temperature (T3) is determined on the basis of the fuel quantity (ME) and the mixing temperature (T22) and/or **in that** the air flow rates (ML22 and ML31) into and out of the internal combustion engine are determined on the basis of the temperature (T22) and the pressure (P2) of the gas flowing into the internal combustion engine, the rotational speed (N) and/or the fuel quantity (ME).

4. Method for controlling an internal combustion engine having an air system, wherein at least one variable which characterizes the air system is determined by means of at least one model,

   - wherein output variables are determined by means of at least a first component model and a second component model on the basis of input variables,
   - in that in addition to at least one output variable of a second component model, a manipulated variable and a measurement variable are additionally taken into account as input variables of the first component model,
   - in that the measurement variable characterizes the state of the ambient air,
   - in that the manipulated variable characterizes the fuel quantity to be injected,
   - wherein a component model is embodied as an exhaust pipe model which determines the pressure downstream of the turbine on the basis of at least the air flow rate (ML32) via the turbine, the ambient pressure (P1) and the temperature (T4) downstream of the turbine.

5. Device which comprises means which are designed to carry out a method according to at least one of Claims 1 to 4.

**Revendications**

1. Procédé de commande d'un moteur à combustion interne équipé d'un système d'alimentation en air, selon lequel on détermine au moins une grandeur caractérisant le système d'alimentation en air avec au moins un modèle,

   - les grandeurs de sortie se déterminent à l'aide d'au moins un premier et un second modèle partiel à partir de grandeurs d'entrée,

   en ce que comme grandeurs d'entrées du premier modèle partiel, à côté d'au moins une grandeur de sortie d'un second modèle partiel, on tient compte en plus d'une grandeur de réglage et d'une grandeur de mesure,

- la grandeur de mesure caractérise l'état de l'air ambiant,
- la grandeur de réglage caractérise la quantité de carburant à injecter,

un module partiel (11) est formé comme modèle de conduite d'air frais à haute pression qui détermine la pression d'alimentation (P2), la teneur en oxygène (M022) de la quantité d'air qui arrive dans le moteur à combustion interne et la température de mélange (T22) au moins à partir des quantités d'air ML21, ML22 et MA) arrivant dans une conduite d'air frais à haute pression, de leur teneur en oxygène, de la température de l'air d'alimentation (T2) et de la température (TA) dans la conduite de recyclage des gaz d'échappement.

2. Procédé de commande d'un moteur à combustion interne équipé d'un système d'alimentation en air, selon lequel au moins un modèle détermine au moins une grandeur caractérisant le système d'alimentation en air

- les grandeurs de départ se déterminant au moins à partir d'un premier et d'un second modèle partiels à partir des grandeurs d'entrée,
- comme grandeurs d'entrée du premier modèle partiel, à côté d'au moins une grandeur de sortie d'un second modèle partiel on tient compte en plus d'une grandeur de réglage et d'une grandeur de mesure,
- les grandeurs de mesure caractérisent l'état de l'air ambiant,
- la grandeur de réglage caractérisant la quantité de carburant à injecter,
- un modèle partiel est présenté comme modèle de cylindre qui calcule au moins la température des gaz d'échappement (T3), la quantité d'air (ML22) qui arrive dans le moteur à combustion interne et la quantité d'air (ML31) sortant du moteur à combustion interne et leur teneur en oxygène (MO31) à partir au moins de la quantité de carburant (ME), de la vitesse de rotation (N), de la pression d'alimentation (P2), de la température de mélange (T22) et de la teneur en oxygène (M022) de l'air arrivant dans le moteur à combustion interne.

3. Procédé selon la revendication 2, **caractérisé en ce que** partant de la quantité de carburant (ME) et de la température de mélange (T22) on détermine la température (T3) des gaz d'échappement et/ ou on détermine les quantités d'air (ML22 et ML31) qui arrivent dans le moteur à combustion interne et sortent du moteur à combustion interne, à partir de la température (T22) et de la pression (P2) des gaz arrivant dans le moteur à combustion interne, de la vitesse de rotation (N) et/ou de la quantité de carburant (ME).

4. Procédé de commande d'un moteur à combustion interne équipé d'un système d'alimentation en air, selon lequel avec au moins un modèle on détermine au moins une grandeur caractérisant le système d'alimentation en air,

- on détermine des grandeurs de sortie à l'aide d'au moins un premier et un second modèle partiels à partir des grandeurs d'entrée,
- comme grandeurs d'entrée du premier modèle partiel, en plus d'au moins une grandeur de sortie d'un second modèle partiel on tient compte en plus d'une grandeur de réglage et d'une grandeur de mesure,
- la grandeur de mesure caractérise l'état de l'air ambiant,
- la grandeur de réglage caractérise la quantité de carburant à injecter,
- un modèle partiel qui est un modèle de conduite d'échappement, détermine la pression après la turbine à partir d'au moins une quantité d'air (ML32) passant par la turbine, la pression ambiante (P1) et la température (T4) en aval de la turbine.

5. Dispositif comportant des moyens réalisés pour exécuter un procédé selon au moins l'une des revendications 1 à 4.

# Fig. 1

Fig. 2

# Fig. 3

EP 1 247 016 B2

# Fig. 4

**Fig. 5**

EP 1 247 016 B2

# Fig. 6

# Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19756619

- EP 0845586 A

**In der Beschreibung aufgeführte Nicht-Patentliteratur**

- *Motortechnische Zeitschrift,* 186-192